# EUROPEAN PATENT SPECIFICATION

(11) **EP 0 771 397 B1**
(45) Date of publication and mention of the grant of the patent: **01.12.1999**
(21) Application number: 95926069.6
(22) Date of filing: 03.07.1995
(51) Int. Cl.: F16B 2/06, F16L 3/10

(54) **APPARATUS FOR CARRYING A TUBE OR A BAR**
BEFESTIGUNGSVORRICHTUNG FÜR EIN ROHR ODER FÜR EINE STANGE
DISPOSITIF DE MAINTIEN D'UN TUBE OU D'UNE BARRE

(30) Priority: 18.07.1994 SE 9402500
(43) Date of publication of application: 07.05.1997
(73) Proprietor: ALFA LAVAL AGRI AB, 147 21 Tumba (SE)
(72) Inventor: LINDQUIST, Hans, S-144 42 Rönninge (SE)
(74) Representative: Lerwill, John
(86) International application number: SE9500819
(87) International publication number: WO9602765

(56) References cited:
- AT-B- 342 927
- SE-B- 306 816
- SE-B- 322 097
- US-A- 2 550 001

## Description

### TECHNICIAL FIELD OF THE INVENTION

The present invention relates to an apparatus comprising a carrying member and a retention member for carrying and keeping a tube or a bar at a certain distance from a surface.

The invention also relates to a combination comprising such an apparatus, a support member and a fastening element for fixation of the apparatus at the support member.

The invention also relates to a set of parts comprising a plurality of such apparatuses.

### BACKGROUND OF THE INVENTION

A countless number of apparatuses for suspension of tubes or bars are obtainable on the market. In such a known apparatus marketed by Alfa Laval Agri AB, Tumba, Sweden, the carrying member comprises a mounting member which is adapted to be mounted by two screws on for example a wall, a concave reception element, a distance member between the mounting member and the reception member in the form of a bar having an oval cross section, adapted to keep the tube or the bar at a certain distance from the wall, and a retaining member which is adapted to be mounted by means of two screws on the reception element such that the tube is kept in the reception element. Hereby the reception element and the retaining member within their delimiting surfaces surround the tube or the bar along substantially the whole of its periphery.

In US-A-2 550 001 there is described an adjustable standpipe clamp consisting of a bracket, shaped from sheet metal with spaced side walls with edges defining a recess at an upper side and securing flanges extending outwardly in opposite directions from the lower side, and a clamping stop secured to the bracket by screw bolts which are adjustable to suit different pipe sizes.

The known apparatus has the drawback that it is cumbersome to assemble. Furthermore, it demands a large consumption of material for its manufacture and is complicated to produce. These factors result in a high price.

### OBJECTS OF THE INVENTION

One object of the invention is to achieve an apparatus for suspending and retaining a tube or bar which is simple to assemble.

Another object of the invention is to achieve such an apparatus which demands a low material consumption for its manufacture and is simple and inexpensive to produce.

### SUMMARY OF THE INVENTION

These objects are achieved by an apparatus of the initially described kind wherein the carrying member is made up of a plurality of side walls each comprising at least one section of a piece of sheet metal or another thin-wall material, said side walls comprising a first side wall adapted to be mounted on a support member, such as a rail, a wall, a floor or the like; and a second side wall and a third side wall extending from the same side of the first side wall, and being connected thereto, the second and the third side walls each having an edge portion provided with a recess for reception of said tube or bar from a predetermined direction; and the retention member being connectable to the carrying member to keep the tube or the bar in the respective recess, and characterised in that the second and third side walls are disposed with the first side wall therebetween and are connected to the first side wall and one another such that a space is formed between the first, the second and the third side walls.

Preferably, when the first side wall is upright, the lowest point of the recess in each of the edge portions of the second and the third walls is below the ends of the edge portions.

Suitably, the second and the third side walls are connected to one another by means of a fourth side wall, and a line along the interconnection of the fourth side wall and each of the second and the third side walls forms an angle other than a right angle with the first wall.

Suitably, the retention member is provided with a flange, the fourth side wall being adapted to cooperate with said flange and being provided with an opening for reception of a screw or the like, which is adapted to connect the retention member to the carrying member.

Advantageously, the first side wall has a thereto rigidly connected fastening element and has an opening for reception of a fastening member.

Preferably, said first side wall comprises a first and a second part of one and the same piece of sheet metal, which parts at least partly overlap one another, the first part being connected to the second side wall and the second part being connected to the third side wall.

### DRAWING SUMMARY

The invention will now be described in further detail with reference to the acccompanying drawings, in which
Figure 1 is a perspective view of an apparatus according to the invention comprising a carrying member and a retention member mounted on a rail, and a tube mounted between the carrying member and the retention member,
Figure 2 is a plane view of the carrying member at a first stadium of manufacture,
Figure 3 is a perspective view of the carrying member at a second stadium of manufacture,
Figure 4 shows the carrying member and the retention member in perspective,
Figure 5 shows the carrying member in another perspective,
Figure 6 shows how the carrying member is mounted on a rail, and
Figure 7 shows partly in section the carrying member with the retention member mounted on said rail.

### DETAILED DESCRIPTION OF PREFERRED EMBODIMENTS

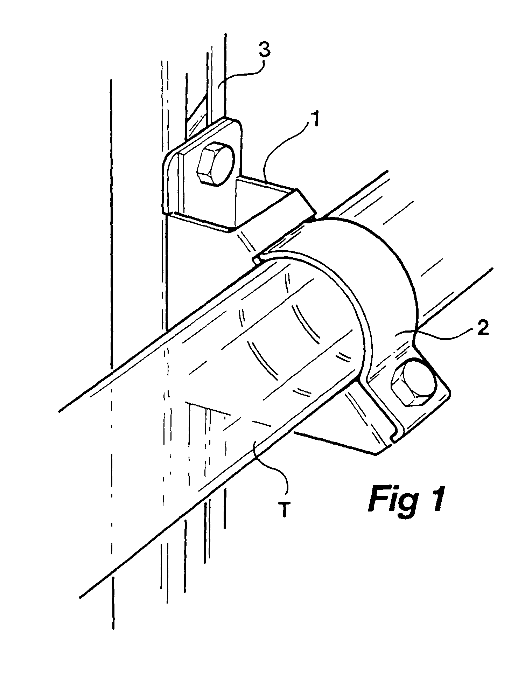

Figure 1 shows an apparatus according to the invention comprising a carrying member 1 and a retention member 2. The carrying member 1 is connected to a support member 3 in the form of a rail. A tube T is mounted between the carrying member 1 and the retention member 2.

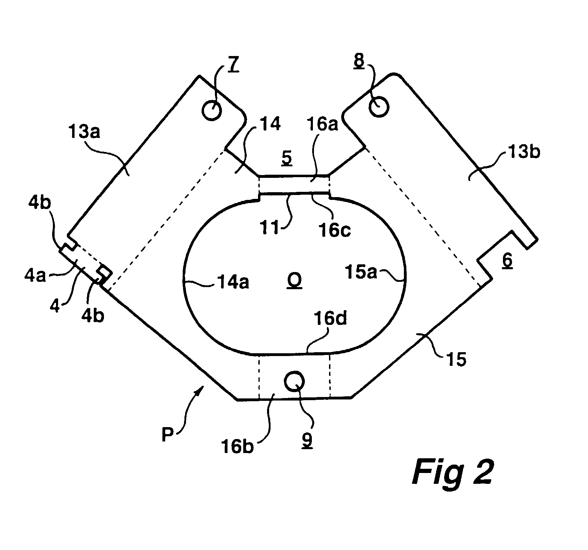

Figure 2 shows a pre-stadium of the carrying member 1 after a piece of sheet metal P has been punched with a substantially oval opening O, a first protruding element 4a with two protruding, opposedly directed elements 4b, a first cut-out 5 and a second cut-out 6 and three holes 7, 8, 9. The oval opening O is furthermore provided with a third cut-out 11. The dotted lines divide sheet metal sections 13a, 14, 15, 16a, 16b, 13b and 4.

The carrying member 1 according to he invention is manufactured of a piece of sheet metal P of stainless steel in order to be able to resist corrosive environments. Of course, it would be possible to manufacture the carrying member 1 in any thin-wall bendable material such as ordinary steel sheet metal, aluminium sheet metal or a thin-wall plate of a suitable plastic material.

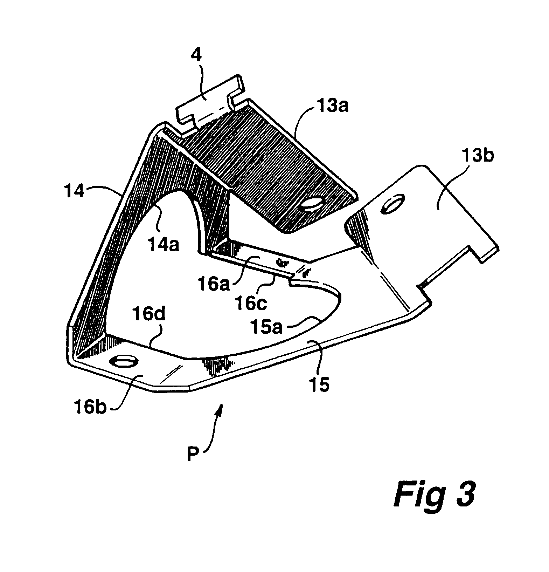

Figure 3 shows an intermediate stadium of a manufacture of the carrying member 1. The different sections 13a, 14, 15, 16a, 16b, 13b and 4 have been bent to different degrees.

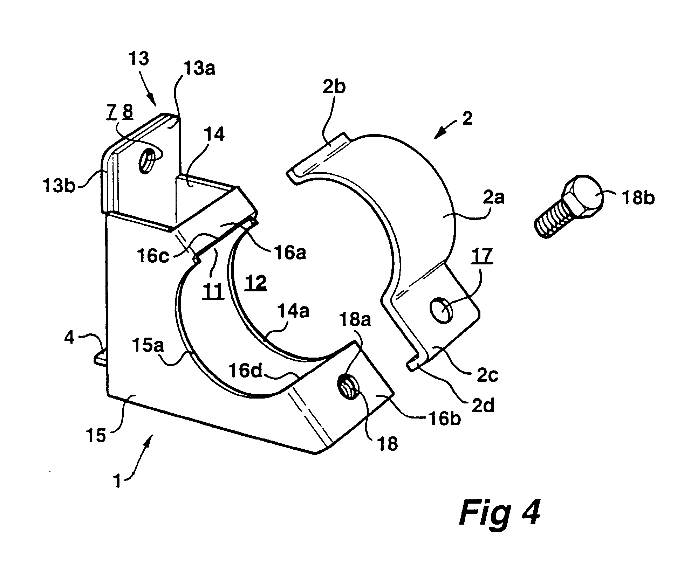

Figure 4 shows the carrying member 1 and the retention member 2. The oval opening O of the piece of sheet metal P now constitutes a semicircular formed recess 12 of the carrying member 1. The sections 13a and 13b overlap one another and form a first side wall 13 of the carrying member 1. The section 14 forms a second side wall, the section 15 forms a third side wall and the sections 16a and 16b form a fourth side wall of the carrying member 1. The section 16b has a hole 18 with a nut 18a arranged therebehind. A screw 18b is provided to be fastended in the nut 18a. The holes 7 and 8 of sections 13a and 13b are placed opposite to one another.

The retention member 2 has a semicircular formed element 2a, a flange 2b, which is adapted to be introduced into the cut-out 11 of the carrying member 1, a first protruding element 2c provided with a hole 17, and with a third protruding element 2d, which is adapted to abut the fourth side wall 16a, 16b.

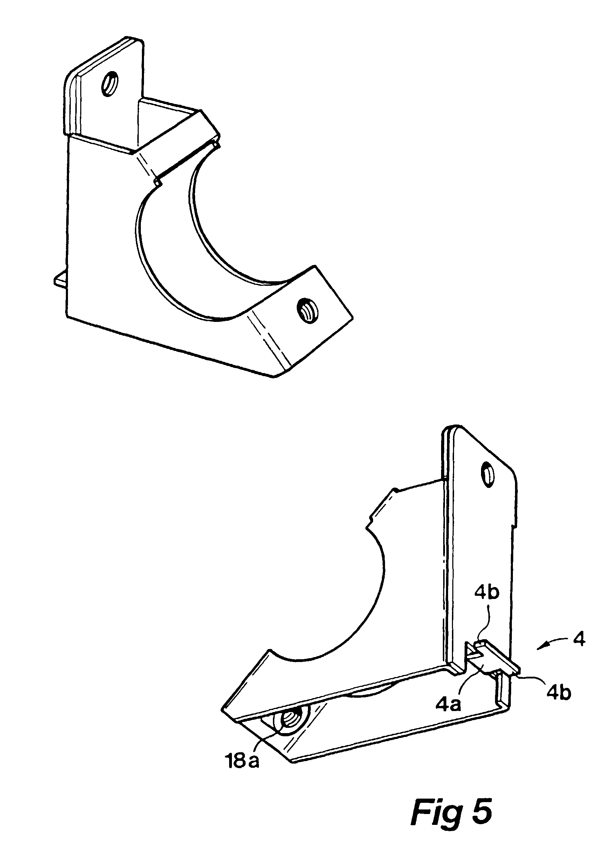

Figure 5 shows the carrying member 1 from another perspective, where the section 4 has been bent past the section 13b and forms a fastening element. The nut 18a is provided on the side of the fourth side wall 16a, 16b that faces the first side wall 13. The nut 18a is fastened to the section D by soldering or the like, but can certainly also constitute a loose part.

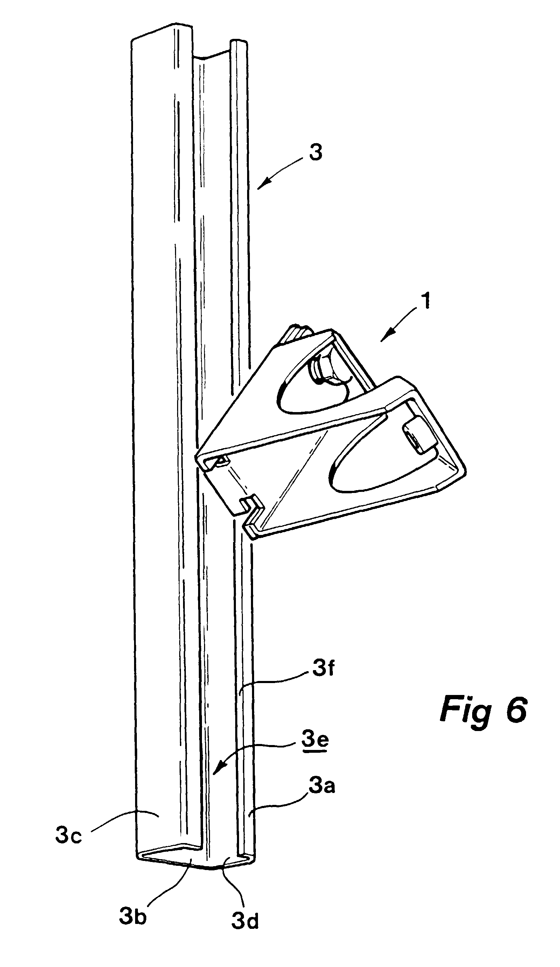

Figure 6 shows the rail 3, which comprises a first wall 3a and a second wall 3b, which is substantially parallel to the first wall 3a, a third wall 3c and a fourth wall 3d, which is substantially parallel to the third wall 3c. The first and the second wall 3a, 3b, respectively, form a substantially right angle with the third and the fourth wall 3c, 3d, respectively. The walls 3a-d are connected to each other in such a way that they substantially enclose a space 3e. The first wall 3a has a slit 3f, in which the fastening element 4 of the carrying member 1 is adapted to be introduced. Accordingly, the carrying member or rail 3 has the shape of a bar of a C-profile, i.e. support is tubular and provided with a longitudinal slit 3f.

The first protruding part 4a of the fastening element 4 is narrower than the slit 3f, but end parts of the two other protroding parts 4b are at a distance from one another which is larger than the width of the slit. Accordingly, the fastening element 4 is a T-formed engagement member.

As shown in figure 6 the carrying member 1 can be turned in relation to the support member 3, such that a fastening element can be introduced into the space 3e behind the slit 3f.

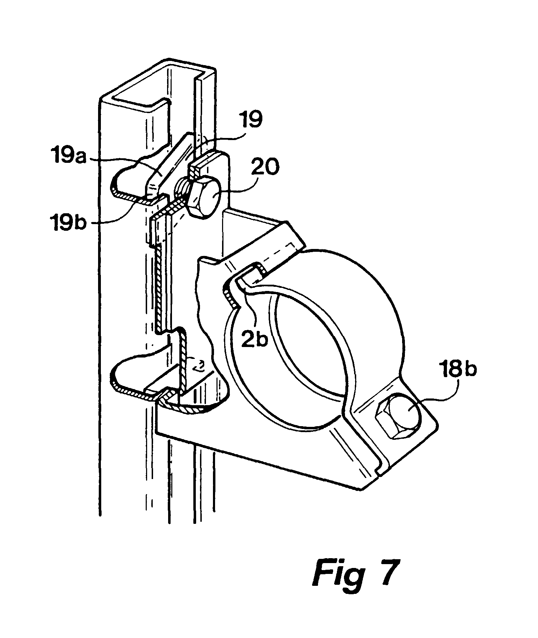

When the fastening element 4 is introduced through the slit 3f the carrying member 1 is turned to the position shown in figure 7. Hereby the other protruding parts 4b will be present in the space 3e of the rail and abutting the first wall 3a.

It is now possible to take the carrying member 1 to a desired position relative to the rail 3 and to anchor it there. For this purpose a trapezium formed nut 19 with screw 20 are prepared to be mounted on the carrying member 1. The nut 19 has two long sides 19a, which are at such a distance from one another, which is less than the width of the slit 3f, and two short sides 19b, which are at a distance from one another, which is larger than the width of the slit 3f. Hereby, the nut 19 can be introduced through the slit to the space of the rail 3 and thereafter be turned and abut against the first wall 3a of the rail 3 such that the screw can be tightened without rotation of the nut 19. The form of the nut also serves to enable displaceable adjustment of the carrying member along the length of the rail 3.

When the carrying member is connected to the rail 3, so that the first side wall 13 of the carrying member is upright, the lowest point of the recess 12 is below the ends of the edge portions 14a, 15a which define the recess in the second and third side walls, as shown clearly in figure 7.

Now the carrying member 1 is ready to receive a tube or a bar (not shown in figure 7, but cf. figure 1). When the tube or the bar is in the recess 12 of the carrying member 1 the flange 2b of the retaining member 2 is introduced through the cutout 11 and the retaining member 2 is fixed to the carrying member 1 by means of a screw 18b, which is screwed into the nut 18a.

During mounting of a tube a number of rails 3 along the length of the tube are needed. It is also common that several tubes, which are often of different dimensions, are mounted on the same rails. In connection with for example reconstruction of tube installations it is advantageous to be able to mount further carrying members 1 between already existing carrying members, space permitting. Owing to the shape of the fastening element 4 of the carrying member 1 it is possible to mount a carrying member at a rail without having access to an end of the rail.

It would of course be possible to weld, to solder or to glue together a carrying member 1 of the above described kind. In this case the first side wall 13 only needs to comprise one section 13a or 13b.

Each of the side walls 14 and 15 are shown as comprising a sheet metal section each, whereas the side wall 16a, 16b is shown to comprise two sheet metal sections. Of course, it would be possible if needed to punch further material out of the piece of sheet metal shown in figure 2, such that anyone of the side walls 13, 14, 15 or 16a, 16b would be formed by two or more sections of sheet metal.

It would also be possible to manufacture the carrying member 1 of a relatively stiff net which is bent to the form of a carrying member 1.

It is not necessary that the carrying member has exactly the shape as described above. On the contrary, it would be possible to form the carrying member as a triangle, i.e. without the fourth side wall 16a, 16b. Hereby, the opening O substantially takes the form of a circle.

It would also be possible to let the fourth wall take a bent form, i.e. such that the second side wall transforms continuously into the third side wall without forming a sharp fold.

## Claims

1. Apparatus comprising a carrying member (1) and a retention member (2) for carrying and keeping a tube (T) or a bar at a certain distance from a surface,
the carrying member (1) being made up of a plurality of side walls each comprising at least one section (13a, 14,15,16a,16b or 13b) of a piece (P) of sheet metal or another thin-wall material, said side walls comprising
- a first side wall (13) adapted to be mounted on a support member (3), such as a rail, a wall, a floor or the like; and
- a second side wall (14) and a third side wall (15) extending from the same side of the first side wall (13) and being connected thereto,
- the second and the third side walls (14,15) each having an edge portion (14a,15a) provided with a recess (12) for reception of said tube or bar from a predetermined direction; and
- the retention member (2) being connectable to the carrying member to keep the tube or the bar in the respective recess (12),
characterised in that
- the second and third side walls are disposed with the first side wall therebetween and are connected to the first side wall and one another such that a space is formed between the first, the second and the third side walls (13, 14, 15).

2. Apparatus according to claim 1, wherein, with the first side wall (13) upright, the lowest point of the recess (12) in each of the edge portions (14a, 15a) of the second and the third walls (14, 15) is below the ends of the edge portions.

3. Apparatus according to claim 1 or 2, wherein the second and the third side walls (14,15) are connected to one another by means of a fourth side wall (16a, 16b).

4. Apparatus according to claims 2 and 3, wherein a line along the interconnection of the fourth side wall (16a, 16b) and each of the second and the third side walls (14,15) forms an angle other than a right angle with the first wall (13).

5. Apparatus according to claim 3 or 4, wherein the retention member (2) is provided with a flange (2b), the fourth side wall (16a,16b) being adapted to cooperate with said flange (2b) and being provided with an opening (17) for reception of a fastening member, such as a screw (18b), which is adapted to connect the retention member (2) to the carrying member (1).

6. Apparatus according to anyone of the preceding claims, wherein the first side wall (13) has a fastening element (4) rigidly connected thereto and has an opening (7,8) for reception of a fastening member (19,20).

7. Apparatus according to anyone of the preceding claims, wherein said first side wall (13) comprises a first and second parts (13a, 13b) of one and the same piece of sheet metal (P) or other thin wall material, which parts at least partly overlap one another, the first part (13a) being connected to the second side wall (14) and the second part (13b) being connected to the third side wall (15).

8. Apparatus according to anyone of the preceding claims, wherein said carrying member (1) comprises a piece (P) of sheet metal or another thin-wall material, which after bending forms said first, second and third side walls and which is provided with at least one punched hole (O) which, after bending of the piece (P), forms said recess (12) in each of said second and third walls.

9. Apparatus according to claim 8, when dependent directly or indirectly on claim 2, wherein said piece (P) of sheet metal or another thin-wall material in the area of said punched hole (O) has two opposite, substantially parallel edges (16c, 16d), which are substantially of the same length and the end points of which are substantially opposite to one another, and before said bending has two opposing, concave edges (14a, 15a) extending outside the area which is between the parallel edges, and being the mirror image of each other, said concave edges forming said recesses in the second and third walls, respectively, after said bending of the piece (P).

10. Apparatus according to claim 9, wherein said concave edges (14a, 15a) are formed substantially semi-circular.

11. Combination characterized in that it comprises at least one apparatus according to any one of the preceding claims, a support member (3) for supporting said apparatus and a connection member (19,20) for releasable fixation of the carrying member (1) relative to the support member, wherein the support member (3) in a known manner is adapted to enable a guided movement of the carrying member (1) relative to the support member (3) before the carrying member (1) is fixed relative to the support member by means of the connection member (19,20).

12. Combination according to claim 11, wherein the support member (3) has the form of a bar of a C-profile, i.e. the support member (3) is tubular and provided with a longitudinal slit (3f).

13. Combination according to claim 12, wherein said apparatus has a substantially T-formed fastening element (4) adapted to extend through the slit (3f) of said tubular support member (3).

14. Combination according to claim 13 or 14, wherein the fastening element (4) comprises a nut (19) adapted to be inside said tubular support member (3) and to cooperate with a screw (20), the nut (19) being formed such that it in a known manner is prevented by the tubular support member (3) from rotating, when the screw (20) is loosened or tightened, but is free to be moved together with the carrying member (1) along said slit (3f) when the carrying member (1) is not fixed relative to the support member (3).

15. A set of parts characterized in that it comprises a plurality of apparatuses according to anyone of the claims 1 - 10 adapted to carry tubes (T) or bars of different dimensions and to optionally be connected to said support member (3).

## Patentansprüche

1. Vorrichtung mit einem Trageelement (1) und einem Arretierelement (2) zum Tragen und Halten eines Rohres (T) oder einer Stange in einem bestimmten Abstand von einer Oberfläche, wobei
das Trageelement (1) aus einer Vielzahl von Formseiten besteht, die jeweils mindestens einen Abschnitt (13a, 14, 15, 16a, 16b oder 13b) aus einem Stück (P) aus Blech oder einem anderen dünnwandigen Material umfassen, wobei die Seitenwände
- eine erste Formseite (13) umfassen, die angepaßt ist, um an einem Halteelement (3) wie etwa einer Schiene, einer Wand, einem Fußboden o.ä. befestigt zu werden, und
- eine zweite Formseite (14) und eine dritte Formseite (15), die sich von derselben Seite der ersten Formseite (13) erstrecken und daran befestigt sind, wobei
- die zweiten und dritten Formseiten (14, 15) jeweils einen Kantenabschnitt (14a, 15a) aufweisen, der mit einer Vertiefung (12) zum Aufnehmen des Rohres oder der Stange aus einer vorbestimmten Richtung versehen ist, und wobei
- das Arretierelement (2) mit dem Trageelement verbunden werden kann, um das Rohr oder die Stange in der jeweiligen Vertiefung (12) zu halten,
**dadurch gekennzeichnet, daß**
die zweiten und dritten Formseiten mit der ersten Formseite dazwischen angeordnet und mit der ersten Formseite und miteinander so verbunden sind, daß zwischen den ersten, zweiten und den dritten Formseiten (13, 14, 15) ein Raum gebildet wird.

2. Vorrichtung nach Anspruch 1, wobei bei aufrechter Position der ersten Formseite (13) der unterste Punkt der Vertiefung (12) in jedem der Kantenabschnitte (14a, 15a) der zweiten und dritten Formseiten (14, 15) unterhalb der Enden der Kantenabschnitte liegt.

3. Vorrichtung nach Anspruch 1 oder 2, wobei die zweiten und dritten Formseiten (14, 15) durch eine vierte Formseite (16a, 16b) miteinander verbunden sind.

4. Vorrichtung nach Anspruch 2 und 3, wobei eine Linie entlang der Verbindung der vierten Formseite (16a, 16b) und jeder der zweiten und dritten Formseiten (14, 15) einen anderen als einen rechten Winkel mit der ersten Formseite (13) bildet.

5. Vorrichtung nach Anspruch 3 oder 4, wobei das Arretierelement (2) mit einem Flansch (2b) versehen ist, wobei die vierte Formseite (16a, 16b) so angepaßt ist, um mit dem Flansch (2b) zusammenzuwirken, und mit einer Öffnung (17) zum Aufnehmen eines Befestigungselementes wie etwa einer Schraube (18b) versehen ist, das angepaßt ist, um das Arretierelement (2) mit dem Trageelement (1) zu verbinden.

6. Vorrichtung nach einem der vorangegangenen Ansprüche, wobei die erste Formseite (13) ein Befestigungselement (4) aufweist, das starr daran befestigt ist und eine Öffnung (7, 8) zum Aufnehmen eines Befestigungselementes (19, 20) aufweist.

7. Vorrichtung nach einem der vorangegangenen Ansprüche, wobei die erste Formseite (13) erste und zweite Teile (13a, 13b) aus ein und demselben Blechstück (P) oder einem anderen dünnwandigen Material umfaßt, wobei die Teile einander wenigstens teilweise überlappen und wobei der erste Teil (13a) mit der zweiten Formseite (14) verbunden ist und der zweite Teil (13b) mit der dritten Formseite (15).

8. Vorrichtung nach einem der vorangegangenen Ansprüche, wobei das Trageelement (1) ein Stück (P) aus Blech oder einem anderen dünnwandigen Material umfaßt, das nach dem Biegen die ersten, zweiten und dritten Formseiten bildet und das mit mindestens einem Stanzloch (O) versehen ist, das nach dem Biegen des Stückes (P) in jeder der ersten und zweiten Seiten die Vertiefung (12) bildet.

9. Vorrichtung nach Anspruch 8, wenn dieser direkt oder indirekt rückbezogen ist auf Anspruch 2, wobei das Stück (P) aus Blech oder einem anderen dünnwandigen Material im Bereich des Stanzloches (O) zwei gegenüberliegende im wesentlichen parallele Kanten (16c, 16d) aufweist, die im wesentlichen gleich lang sind und deren Endpunkte im wesentlichen einander gegenüberliegen, und vor dem Biegen zwei gegenüberliegende, konkave Kanten (14a, 15a), die sich außerhalb des Bereiches erstrecken, der zwischen den parallelen Kanten liegt und die zueinander spiegelbildlich sind, wobei die konkaven Kanten nach dem Verbiegen des Stückes (P) die Vertiefungen in den ersten und zweiten Seiten bilden.

10. Vorrichtung nach Anspruch 9, wobei die konkaven Kanten (14a, 15a) im wesentlichen halbkreisförmig gebildet sind.

11. Kombination, **dadurch gekennzeichnet, daß** sie mindestens eine Vorrichtung nach einem der vorangegangenen Ansprüche umfaßt, sowie ein Halteelement (3) zum Halten der Vorrichtung und ein Verbindungselement (19, 20) zum lösbaren Befestigen des Trageelementes (1) in Bezug auf das Halteelement, wobei das Halteelement (3) in bekannter Weise angepaßt ist, um eine geführte Bewegung des Trageelementes (1) in Bezug auf das Halteelement (3) zu ermöglichen, bevor das Trageelement (1) in Bezug auf das Halteelement mit dem Verbindungselement (19, 20) befestigt wird.

12. Kombination nach Anspruch 11, wobei das Halteelement (3) die Form einer Stange mit einem C-Profil hat, d.h. das Halteelement (3) ist röhrenförmig und mit einem longitudinalen Schlitz (3f) versehen.

13. Kombination nach Anspruch 12, wobei die Vorrichtung ein im wesentlichen T-förmiges Befestigungselement (4) aufweist, das angepaßt ist, um sich durch den Schlitz (3f) des röhrenförmigen Halteelementes (3) zu erstrecken.

14. Kombination nach Anspruch 13 oder 14, wobei das Befestigungselement (4) eine Mutter (19) umfaßt, die sich innerhalb des röhrenförmigen Halteelementes (3) befindet und mit einer Schraube (20) zusammenwirkt, wobei die Mutter (19) so geformt ist, daß sie in bekannter Weise durch das röhrenförmige Halteelement (3) am Drehen gehindert wird, wenn die Schraube (20) gelöst oder angezogen wird, aber frei zusammen mit dem Trageelement (1) entlang des Schlitzes (3f) bewegt werden kann, wenn das Trageelement (1) nicht in Bezug auf das Halteelement (3) befestigt ist.

15. Satz von Teilen, **dadurch gekennzeichnet, daß** er eine Vielzahl von Vorrichtungen nach einem der vorangegangenen Ansprüche 1-10 umfaßt, die angepaßt sind, um Rohre (T) oder Stangen unterschiedlicher Ausmaße zu tragen und wahlweise mit den Halteelementen (3) verbunden zu werden.

## Revendications

1. Dispositif comprenant un élément porteur (1) et un élément de retenue (2) pour porter et maintenir un tube (T) ou une barre à une certaine distance d'une surface, l'élément porteur (1) étant constitué par une pluralité de parois latérales comportant chacune au moins une section (13a, 14, 15, 16a, 16b ou 13b) d'un morceau (P) de tôle métallique ou d'une autre matière à paroi mince, lesdites parois latérales comprenant
- une première paroi latérale (13) apte à être montée sur un élément de support (3) tel qu'un rail, un mur, un plancher ou analogue ; et
- une seconde paroi latérale (14) et une troisième paroi latérale (15) s'étendant depuis la même face de la première paroi latérale (13) et étant reliées l'une à l'autre, les deuxième et troisième parois latérales (14, 15) ayant chacune une partie formant bord (14a, 15a) pourvue d'un évidement (12) servant à recevoir ledit tube ou ladite barre depuis une direction prédéterminée ; et l'élément de retenue (2) pouvant être relié à l'élément porteur pour maintenir le tube ou la barre dans l'évidement respectif (12),
caractérisé en ce que
les seconde et troisième parois latérales sont disposées avec la première paroi latérale entre elles et sont reliées à la première paroi latérale et l'une à l'autre de façon qu'un espace soit formé entre la première, la seconde et la troisième parois latérales (13, 14, 15).

2. Dispositif selon la revendication 1, dans lequel la première paroi latérale (13) étant verticale, le point le plus bas est l'évidement (12) dans lequel chacune des parties formant bords (14a, 15a) des seconde et troisième parois (14, 15) est sous les extrémités des parties formant bords.

3. Dispositif selon la revendication 1 ou 2, dans lequel les seconde et troisième parois latérales (14, 15) sont reliées l'une à l'autre à l'aide d'une quatrième paroi latérale (16a, 16b).

4. Dispositif selon les revendications 2 et 3, dans lequel une ligne suivant la jonction de la quatrième paroi latérale (16a, 16b) et de chacune des seconde et troisième parois latérales (14, 15) forme avec la première paroi (13) un angle autre qu'un angle droit.

5. Dispositif selon la revendication 3 ou 4, dans lequel l'élément de retenue (2) comporte un rebord (2b), la quatrième paroi latérale (16a, 16b) étant apte à coopérer avec ledit rebord (2) et étant pourvue d'une ouverture (17) servant à recevoir un élément de fixation tel qu'une vis (18b), apte à relier l'élément de retenue (2) à l'élément porteur (1).

6. Dispositif selon l'une quelconque des revendications précédentes, dans lequel la première paroi latérale (13) comporte un élément de fixation (4) relié de manière rigide à celle-ci et elle comporte une ouverture (7, 8) servant à recevoir un élément de fixation (19, 20).

7. Dispositif selon l'une quelconque des revendications précédentes, dans lequel ladite première paroi latérale (13) comporte une première et une seconde parties (13a, 13b) constituées par un seul et même morceau de tôle métallique (P) ou d'une autre matière à paroi mince, lesquelles parties se chevauchent au moins partiellement l'une l'autre, la première partie (13a) étant reliée à la seconde paroi latérale (14) et la seconde partie (13b) étant reliée à la troisième paroi latérale (15).

8. Dispositif selon l'une quelconque des revendications précédentes, dans lequel ledit élément porteur (1) est constitué par un morceau (P) de tôle métallique ou autre matière à paroi mince qui, après cintrage, forme lesdites première, seconde et troisième parois latérales et qui est pourvu d'au moins un trou (O) formé par emboutissage, lequel, après le cintrage du morceau (P), forme ledit évidement (12) dans chacune desdites seconde et troisième parois.

9. Dispositif selon la revendication 8, annexée directement ou indirectement à la revendication 2, dans lequel ledit morceau (P) de tôle métallique ou autre matière à paroi mince dans la zone dudit trou (O) formé par emboutissage a deux bords opposés sensiblement parallèles (16c, 16d) qui ont sensiblement la même longueur et dont les points d'extrémités sont sensiblement opposés l'un à l'autre, et, avant ledit cintrage, a deux bords opposés concaves (14a, 15a) s'étendant à l'extérieur de la zone comprise entre les bords parallèles, et étant une image reflet l'un de l'autre, lesdits bords concaves formant lesdits évidements respectivement dans les seconde et troisième parois, après ledit cintrage du morceau (P).

10. Dispositif selon la revendication 9, dans lequel lesdits bords concaves (14a, 15a) ont une forme sensiblement semi-circulaire.

11. Combinaison caractérisée en ce qu'elle comprend au moins un dispositif selon l'une quelconque des revendications précédentes, un élément de support (3) pour supporter ledit dispositif et un élément de liaison (19, 20) pour fixer de manière libérable l'élément porteur (1) par rapport à l'élément de support, dans laquelle l'élément de support (3) est apte, d'une manière connue, à permettre un mouvement guidé de l'élément porteur (1) par rapport à l'élément de support (3) avant que l'élément porteur (1) ne soit rendu fixe, par rapport à l'élément de support, à l'aide de l'élément de liaison (19, 20).

12. Combinaison selon la revendication 11, dans laquelle l'élément de support (3) se présente sous la forme d'une barre à profil en C, c'est-à-dire que l'élément de support (3) est tubulaire et comporte une fente longitudinale (3f).

13. Combinaison selon la revendication 12, dans laquelle ledit dispositif a un élément de fixation (4) sensiblement en forme de T, apte à s'étendre à travers la fente (3f) dudit élément tubulaire de support (3).

14. Combinaison selon la revendication 13 ou 14, dans laquelle l'élément de fixation (4) comporte un écrou 19 apte à se trouver à l'intérieur dudit élément tubulaire de support (3) et à coopérer avec une vis (20), l'écrou (19) étant formé de façon que sa rotation soit empêchée d'une manière connue par l'élément tubulaire de support (3), lors du desserrage ou du serrage de la vis (20), mais peut être déplacé librement conjointement avec l'élément porteur (1) le long de ladite rente (3f) lorsque l'élément porteur (1) n'est pas fixe par rapport à l'élément de support (3).

15. Ensemble de pièces, caractérisé en ce qu'il comprend plusieurs dispositifs selon l'une quelconque des revendications 1 à 10, aptes à porter des tubes (T) ou des barres de dimensions différentes et éventuellement à être reliés audit élément de support (3).
